# EUROPEAN PATENT SPECIFICATION

(11) **EP 3 587 992 B1**
(45) Date of publication and mention of the grant of the patent: **18.12.2024**
(21) Application number: 19182679.1
(22) Date of filing: 26.06.2019
(51) Int. Cl.: F41H 5/08, F41H 5/04, F41H 5/013

(54) **SHIELD SYSTEM**
SCHILDSYSTEM
SYSTÈME DE BOUCLIER

(30) Priority: 26.06.2018 US 201816018052
(43) Date of publication of application: 01.01.2020
(73) Proprietor: Tyr Tactical, LLC, Peoria, AZ 85345 (US)
(72) Inventor: BECK, Jason, Peoria, Arizona 85345 (US)
(74) Representative: Lloyd, Robin Jonathan

(56) References cited:
- DE-U1- 29 711 051
- GB-A- 108 801
- GB-A- 2 209 820
- GB-A- 2 458 319
- US-A- 5 241 703
- US-A1- 2017 023 334
- US-A1- 2017 336 176

## Description

### Field

The present disclosure relates to protective shields and more specifically to ballistic shield assemblies.

### Background

There is a need for a ballistic cover that can increase the ballistic rating of a shield. More specifically, there is a need for a ballistic cover with a curved profile to fit the curved profile of the ballistic shield. DE29711051U1 discloses a protective shield for police forces. US2017/336176A1 discloses a riot shield that has certain ballistic properties. GB2209820A discloses a body-protection shield for protecting a user against impact by projectiles. GB108801A discloses a multi-layer curved shield.

### Summary

According to a first aspect of the present disclosure, there is provided a ballistic shield system comprising a shield, an ultra-high-molecular weight polyethylene ballistic cover, and a fastening system. The shield has a first curved profile and a first ballistic rating. The shield may have a front and a back. The ballistic cover has a second curved profile and a second ballistic rating, the second ballistic rating being greater than the first ballistic rating. The ballistic cover may have a front and a back. The fastening system is configured to attach the ballistic cover to the shield. For example, the fastening system may be configured to attach the back of the ballistic cover to the front of the shield. The second curved profile of the ballistic cover matches the first curved profile of the shield to provide uniform contact between the shield and the ballistic cover to minimize the occurrence of ballistic voids between the shield and the ballistic cover. The ballistic shield system may further comprise a handle.

In various embodiments, the fastening system may be a fastener assembly. The fastening system may be a two-part system and may comprise a first part and a second part. For example, the fastening system may comprise a first portion disposed on the shield and a second portion disposed on the ballistic cover. Moreover, the fastening system may be at least one of a nut and bolt assembly, hook and loop material, a magnet assembly, a clip, and an adhesive. In various embodiments, the fastening system may be configured to retain at least a portion of the ballistic cover on the shield in response to the ballistic cover cracking.

In various embodiments, the second curved profile may be a concave profile.

In various embodiments, the shield may comprise a first portion, a second portion and a transition. The ballistic cover may comprise a third portion that substantially covers the first portion and a fourth portion that substantially covers the second portion. The transition may be configured to support an item being used by a user of the ballistic shield system.

In various embodiments, a shield assembly may comprise a shield, a ballistic cover, and a fastening system. The shield may comprise a first front and a first back. The shield may also have a first ballistic rating. The first front of the shield may have a first concave profile. The ballistic cover may comprise a second front and a second back. The ballistic cover may also have a second ballistic rating. The second back of the ballistic cover may have a second concave profile. The second concave profile of the ballistic cover may be configured to mate with, cover, and/or attached to the first concave profile of the first front of the shield. The fastening system may be configured to attach the ballistic cover to the shield.

In various embodiments, the fastening system may be two-part system, having a first part and a second part. More specifically, the first part of the fastening system may be operatively coupled to the first front of the shield. The second part of the fastening system may be operatively coupled to the second back of the ballistic cover. In various embodiments, the fastening system may be, for example, a nut and bolt assembly, hook and loop material, a magnet assembly, a clip, an adhesive, and/or the like.

In various embodiments, the shield may be made of a first material and the ballistic cover may be made of a second material.

In various embodiments, a ballistic tile may comprise a body having a front surface and a back surface. The back surface may have a curved profile. The body may be configured to mate with a curved shield to increase the ballistic rating of the shield. The body may be sized to cover at least 50 percent of a surface area of the curved shield. The curved profile may be a concave profile.

In various embodiments, the ballistic tile is attachable to the shield with a fastening system. The fastening system may be a two-part system. The fastening system may be, for example, a nut and bolt assembly, hook and loop material, a magnet assembly, a clip, an adhesive, and/or the like.

### Brief Description of the Drawings

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
Fig. 1A illustrates a front perspective view of a ballistic shield system with a first attachment system, in accordance with various embodiments;
Fig. 1B illustrates a back perspective view of a ballistic shield system with a first attachment system, in accordance with various embodiments;
Fig. 2A illustrates a front perspective view of a ballistic shield system with a second attachment system, in accordance with various embodiments;
Fig. 2B illustrates a front exploded perspective view of a ballistic shield system with a second attachment system, in accordance with various embodiments;
Fig. 2C illustrates a back exploded perspective view of a ballistic shield system with a second attachment system, in accordance with various embodiments;
Fig. 3 illustrates a front exploded perspective view of a ballistic shield system with a third attachment system, in accordance with various embodiments;
Fig. 4 illustrates a front exploded perspective view of a ballistic shield system with a fourth attachment system, in accordance with various embodiments; and
Fig. 5A illustrates a front exploded perspective view of a ballistic shield system with a fifth attachment system, in accordance with various embodiments.
Fig. 5B illustrates a front assembled perspective view of a ballistic shield system with a fifth attachment system, in accordance with various embodiments.
Fig. 6 illustrates a front exploded perspective view of a ballistic shield system with an alternative cover shape, in accordance with various embodiments.
Fig. 7 illustrates a front perspective view of a ballistic shield system with a user, in accordance with various embodiments.

### Detailed Description

The detailed description of exemplary embodiments herein refers to the accompanying drawings, which show exemplary embodiments by way of illustration. While these exemplary embodiments are described in sufficient detail to enable those skilled in the art to practice the inventions, other embodiments may be realized, and that logical, chemical and mechanical changes may be made without departing from the spirit and scope of the inventions. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

The present disclosure is directed to a ballistic shield system. The ballistic shield system is generally configured to improve the ballistic capability of a traditional shield by adding a ballistic cover or tile to increase the ballistic capabilities of a traditional ballistic shield. Ballistic shields with generally flat profiles have been used to protect users. However, flat profile shields do not provide the same level of coverage as curved profile shields. Moreover, covers or tiles used to increase the ballistic rating of a shield have not been made with curved profiles, because the materials that are used to make the covers are difficult to process.

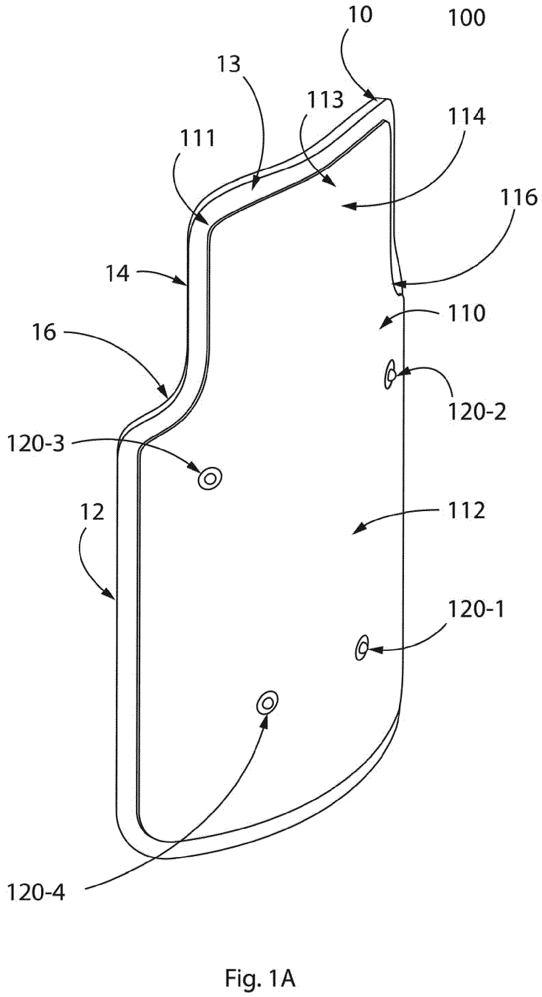

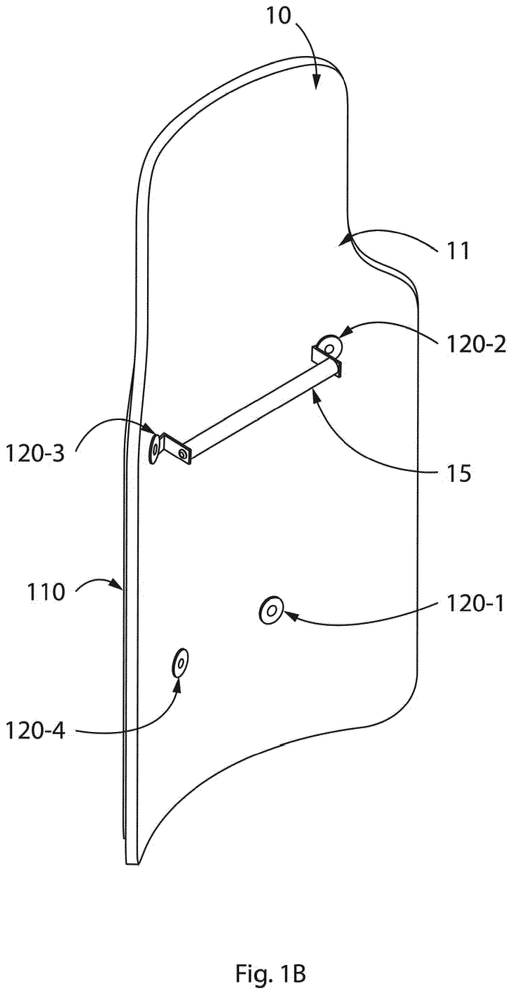

In various embodiments and with reference to Figs. 1A and 1B, a ballistic shield system **100** comprises a shield **10** and a ballistic cover or tile **110.** The ballistic cover **110** may be attached to shield **10** by a fastening system. The fastening system may be any suitable system configured to attach and/or retain ballistic cover **110** to shield **10.** In this regard, ballistic cover **110** may be configured to mate with and/or otherwise uniformly contact shield **10.** The uniform contact between ballistic cover **110** and shield **10** may reduce the risk of a ballistic void or penetration zone being present in ballistic shield system **100.**

In various embodiments, shield **10** may have a curved profile. For example, shield **10** may have a concave profile. Shield **10** may also have a surface that curves inward similar to the interior of a circle or sphere. More specifically, back **11** of shield **10** may have a curved profile such that is surrounds the user. Ballistic cover **110** may have a complementary shape. In this regard, ballistic cover **110** may compliment or mate with shield **10.**

In various embodiments and with continued reference to Figs. 1A and 1B, shield **10** may have a back **11** and a front **13.** Moreover, shield **10** may have a first portion **12** and a second portion **14.** First portion **12** and second portion **14** may be defined separately from each other. First portion **12** and second portion **14** may be joined by a transition **16.** Similarly, ballistic cover **110** may have a back **111** and a front **113** opposite back **111.** Ballistic cover **110** may also have a third portion **112** and a fourth portion **114** that are defined separately from each other and are operatively connected to one another via a transition **116.** In this regard, third portion **112** may be substantially the same shape and size as first portion **12** of shield **10.** Similarly, fourth portion **114** of ballistic cover **110** may be substantially the same size and shape as second portion **14** of shield **10.**

In various embodiments, front **13** of shield **10** may be configured to operatively engage, fasten to, support, and/or otherwise mate with back **111** of ballistic cover **110.** In this regard, the front **13** may have a complimentary profile to back **111** such that they mate and/or contact one another. The complimentary profiles insure that there is uniform contact and/or support between front **13** and back **111.** This uniform contact minimizes the occurrence of ballistic voids between shield **10** and ballistic cover **110.** A ballistic void is present when there is a gap between the shield and ballistic cover. The gap reduces the ballistic capability of the overall shield system and increases the risk of a penetration of and/or to ballistic shield system **100.**

In various embodiments, shield **10** may be made of a first material and ballistic cover **110** may be made of a second material. For example, shield **10** may be made of a bullet resistant steel or a composite material. Shield **10** may have a first ballistic rating based on the material that shield **10** is made from. Ballistic cover **110** may be made from a second material such as, for example, ultra-high-molecular-weight polyethylene (UHMWPE, UHMW) (e.g., DYNEEMA^{®} composite material and/or the like), other preimpregnated aramid fibers (e.g., KEVLAR ^{®}, NOMEX^{®}, TECHNORA^{®}, and/or the like) or heat resistant, high strength composite fibers. Ballistic cover **110** may also be made of and/or from a composite, metal, ceramic and/or of other suitable heat resistant, high strength materials.

In various embodiments, shield **10** may be configured with handle **15** in operation. A user may grab and support shield **10** in front of her body. The curved profile of shield **10** generally provides greater coverage than a shield with a flat profile. Moreover, the user of shield **10** may hold shield **10** with one hand at handle **15** and may hold another device such as, for example, a firearm, camera, and/or the like with the other hand.

In various embodiments and with continued reference to Figs. 1A and 1B, ballistic shield system **100** may comprise a fastening system **120.** Fastening system **120** may be configured to attach, join, fasten, and/or otherwise operatively couple ballistic cover **110** to shield **10.** In this regard, fastening system **120** may be configured to permanently or removably couple ballistic cover **110** to shield **10.** Fastening system **120** may be one or more fasteners or fastener assemblies or fastener systems **120.** Fastener assembly **120** may include a nut and bolt with one or more washers. Fastener assembly **12** may be included in a plurality of locations on shield **10** and ballistic cover **110** and/or as part of ballistic shield system **100.** For example, fastener system **120-1,** fastener system **120-2,** fastener system **120-3,** and fastener system **120-4,** may be disposed over and/or disposed separately from one another and may be configured to pass through portions of shield **10** and ballistic cover **110** to form a ballistic shield system **100.** Moreover, fastener assembly **120** may be made of a suitable material such as hardened steel.

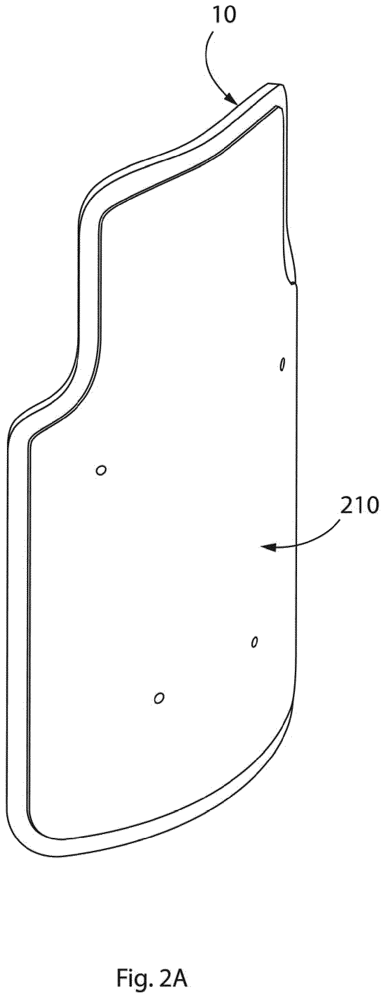

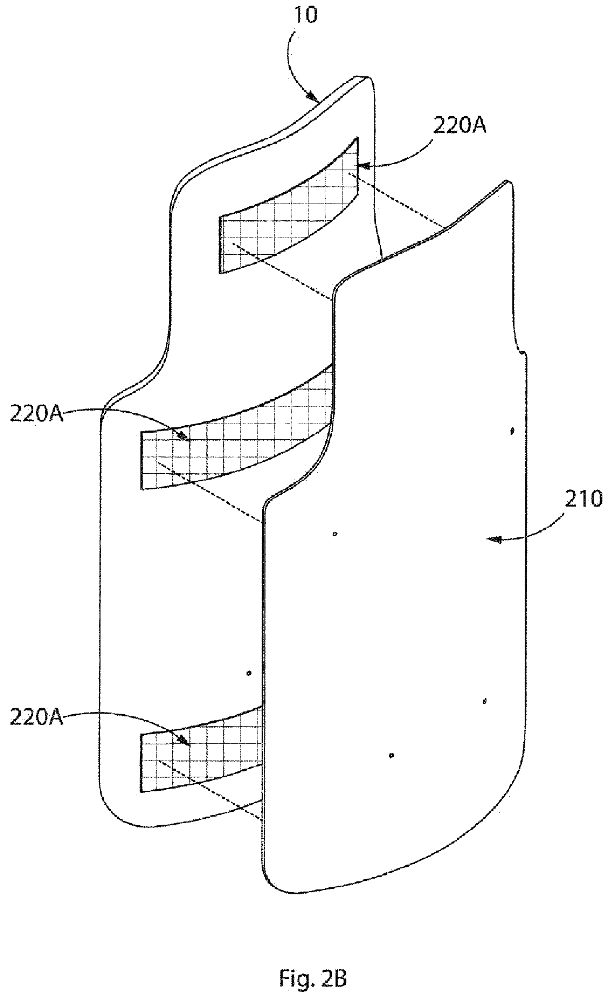

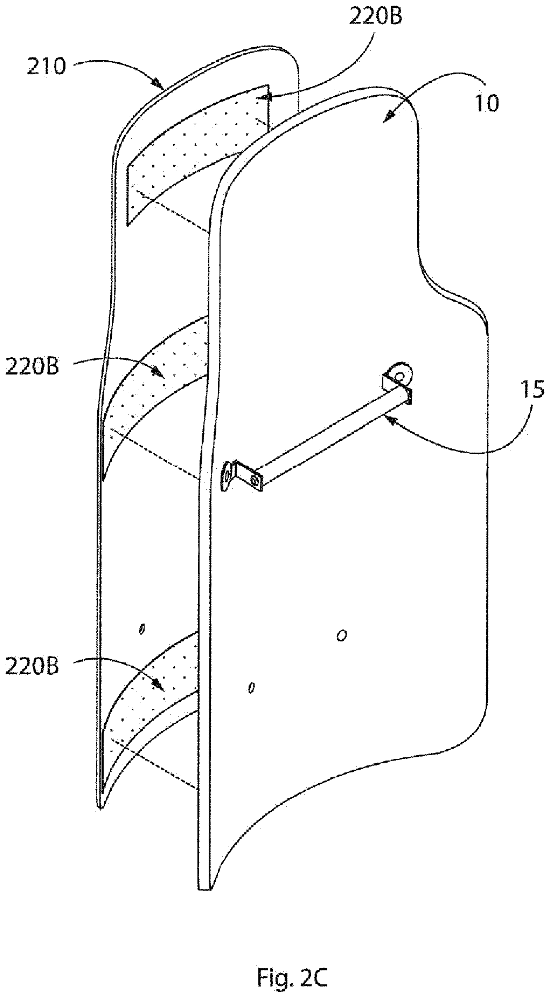

In various embodiments and with reference to Figs. 2A, 2B, and 2C, fastener system **220** may maybe one or more pieces of a hook and loop assembly. In this regard, fastener system **220** may be two-piece assembly, including first piece **220A** and second piece **220B.** First piece **220A** of fastener system **220** may be configured in or disposed on shield **10.** Second piece **220B** of fastener system **220** may be disposed on or attached to ballistic cover **210.** Moreover, fastener system **220** may be disposed at multiple points on shield **10** and/or ballistic cover **210** to provide appropriate coverage and support when ballistic cover **210** is attached to shield **10.**

In various embodiments and with continued reference to Figs. 2A, 2B, and 2C, ballistic cover **210** may be retained on shield **10** in the event that ballistic cover **210** cracks or fractures in response to a high energy event (e.g., a projectile/bullet impact). Because fastener system **220** has a distributed engagement, ballistic cover **210** may be retained over an area. More specifically, ballistic cover **210** may be retained in response to cracking or fracturing because of the disturbed engagement of fastener system **220.** In this regard, ballistic shield system **200** may maintain some or all of its ballistic capabilities in response to ballistic cover **210** experiencing a failure (e.g., the cracking or fracturing of ballistic cover **210)** maintaining the performance of ballistic cover **210** because ballistic cover **210** is retained on shield **10** by fastener system **220.**

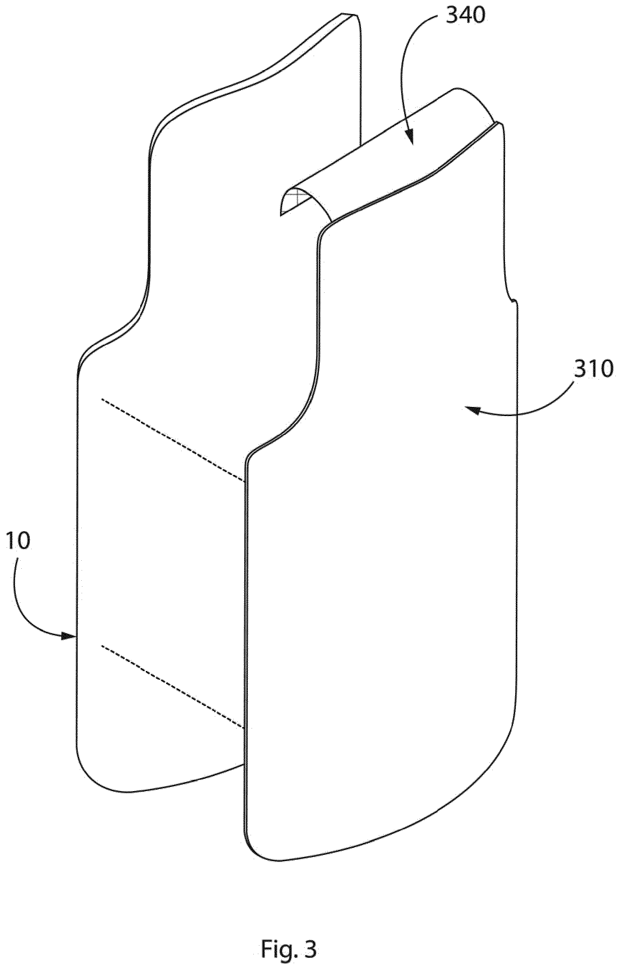

In various embodiments and with reference to Fig. 3, ballistic cover **310** may be configured with a structure that facilitates attachment of ballistic cover **310** to shield **10.** For example, ballistic cover **310** may include a hook **340** that is formed in ballistic cover **310.** Hook **340** may be configured to engage and/or overlap shield **10** in response to ballistic cover **310** being installed on shield **10.**

In various embodiments, ballistic shield system **300** may have a hybrid fastening system. In this regard, any of the fastening systems described herein may be employed together in whole or in part with other fastening systems and/or structures of shield **10** or the ballistic covers described herein. For example, the fastening system may include one or more mechanical fasteners (e.g. a nut in a bolt), a structure formed in the ballistic cover **310,** and/or a fastening system like hook and loop device disclosed herein.

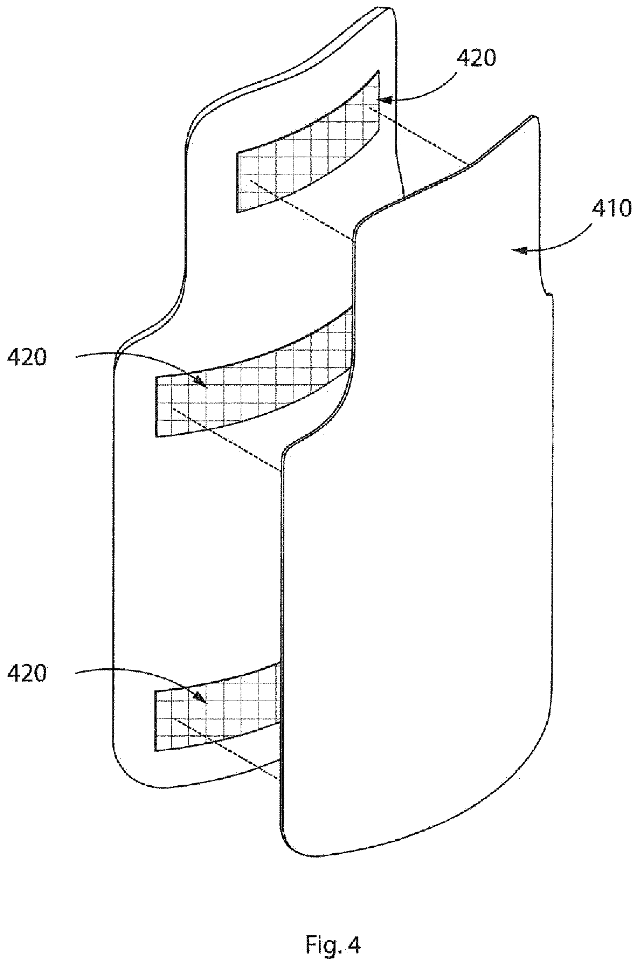

In various embodiments and with reference to Fig. 4, ballistic cover **410** may be attached to shield **10** by one or more alternative methods. For example, shield **10** and/or ballistic cover **410** may be configured to attach to one another with a fastener system **420** that uses adhesive **420** that may be disposed on ballistic cover **410** and/or shield **10.** In response to ballistic cover **410** being applied to shield **10,** ballistic cover **410** and shield **10** may form a single assembly and become ballistic shield system **400.** Moreover, shield **10** and/or ballistic cover **410** may be configured to attach to one another with a fastener system **420** that uses one or more magnets **420.** The other device may be fitted with ferrous metal to create a magnetic connection between ballistic cover **410** and shield **10.** Moreover, fastener system **420** may be disposed at multiple points on shield **10** and/or ballistic cover **210** to provide appropriate coverage and support when ballistic cover **110** is attached to shield **10.**

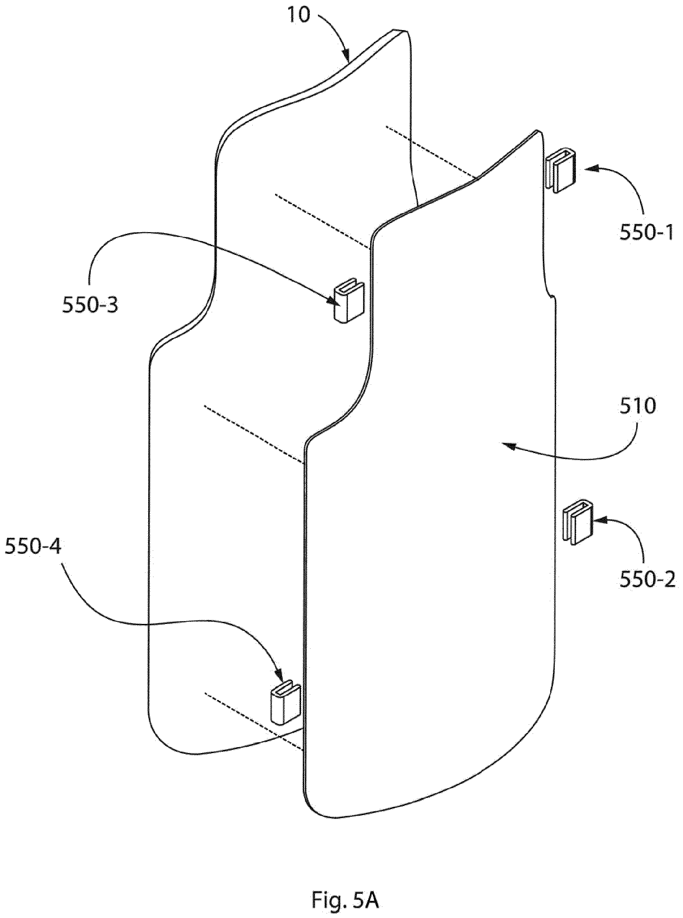

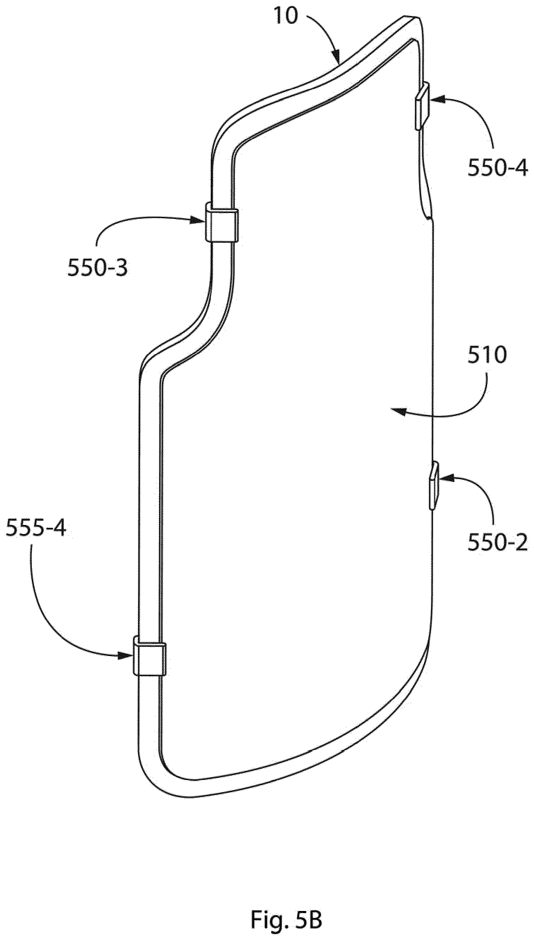

In various embodiments and with reference to Figs. 5A and 5B, ballistic cover **510** may be operatively coupled to shield **10** to form ballistic shield system **500** by employing one or more clip structures **550.** Clip structures **550** may be configured to engage the back of shield **10** and the front of ballistic cover **510** to operatively engage and/or retain ballistic cover **510** on shield **10.** For example, clip structure **550-1,** clip structure **550-2,** clip structure **550-3,** clip structure **550-4** and/or the like, may be used to create a fastening system as described herein to operatively couple shield **10** and ballistic cover **510** to one another.

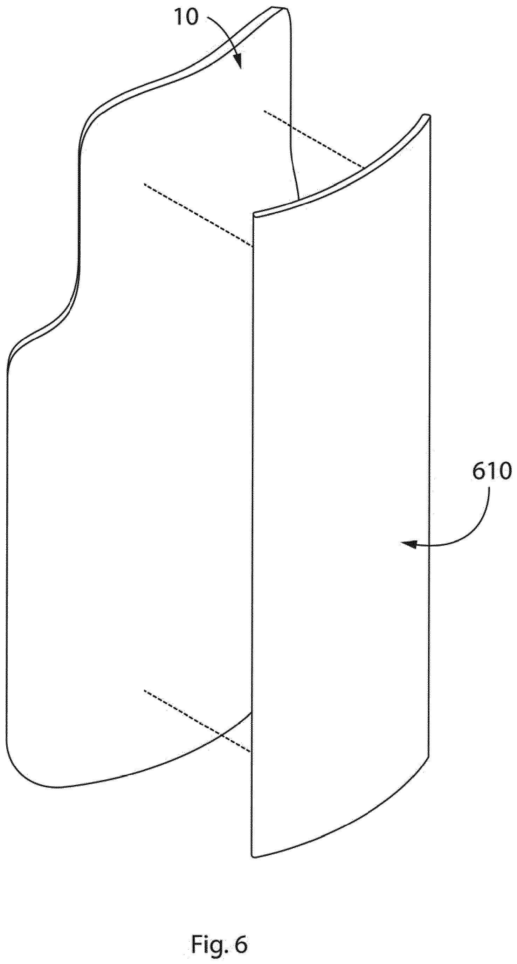

In various embodiments and with reference to Fig. 6, ballistic cover **610** may be any suitable size. In this regard, ballistic cover **610** may have a cover profile and a substantially uniform shape. For example, ballistic cover **610** may have a shape or profile that is a portion of a cylinder. Moreover, in a first configuration, ballistic cover **610** may be sized such that at least 90% of the surface area of shield **10** is covered with ballistic cover **610.** In a second configuration, ballistic cover **610** may be sized such that at least 80% to 90% of the surface area of shield **10** is covered with ballistic cover **610.** In a third configuration, ballistic cover **610** may be sized such that at least 70% to 80% of the surface area of shield **10** is covered with ballistic cover **610.** In a forth configuration, ballistic cover **610** may be sized such that at least 60% to 70% of the surface area of shield **10** is covered with ballistic cover **610.** In a fifth configuration, ballistic cover **610** may be sized such that at least 60% to 70% of the surface area of shield **10** is covered with ballistic cover **610.** In a sixth configuration, ballistic cover **610** may be sized such that at least 50% to 60% of the surface area of shield **10** is covered with ballistic cover **610.** In a seventh configuration, ballistic cover **610** may be sized such that at least 40% to 50% of the surface area of shield **10** is covered with ballistic cover **610.** In a seventh configuration, ballistic cover **610** may be sized such that at least 50% of the surface area of shield **10** is covered with ballistic cover **610.**

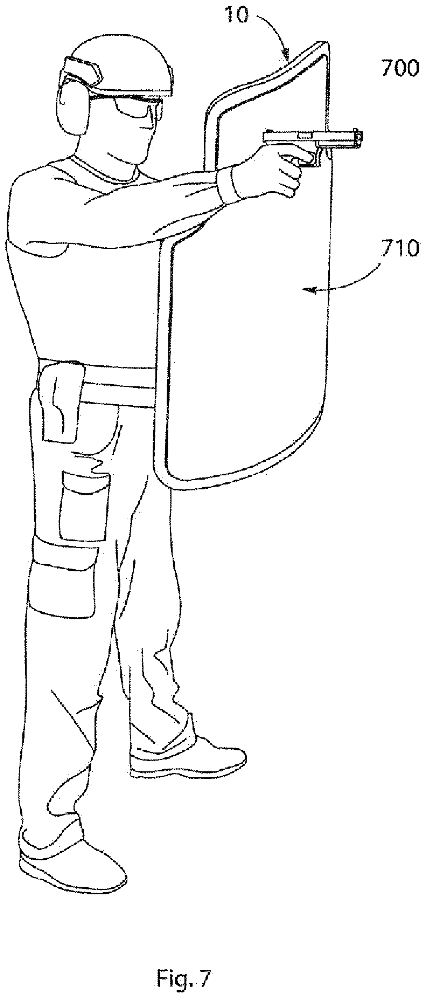

In various embodiments and with reference to Fig. 7, shield system **700** including shield **10** and ballistic cover **710** may be used by a user to at least partially surround and/or protect a user. The user may use portion of shield **10** (e.g., the transition) as described herein to support various items or portions of the user anatomy during use.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether explicitly described. After reading the description, it will be apparent to one skilled in the relevant art(s) how to implement the disclosure in alternative embodiments.

## Claims

1. A ballistic shield system (100), comprising:
a shield (10) having a first curved profile and a first ballistic rating;
an ultra-high-molecular-weight polyethylene ballistic cover (110) having a second curved profile and a second ballistic rating, the second ballistic rating being greater than the first ballistic rating; and
a fastening system (120) configured to attach the ballistic cover (110) to the shield (10),
wherein the second curved profile matches the first curved profile to provide uniform contact between the shield (10) and the ballistic cover (110) to minimize the occurrence of ballistic voids between the shield (10) and the ballistic cover (110).

2. The ballistic shield system (100) of claim 1, wherein the fastening system (120) is a fastener assembly.

3. The ballistic shield system (100) of any of claims 1 to 2, wherein the fastening system (120) comprises a first portion disposed on the shield and a second portion disposed on the ballistic cover.

4. The ballistic shield system (100) of any of claims 1 to 3, wherein the fastening system (120) is at least one of a nut and bolt assembly, hook and loop material, a magnet assembly, a clip, and an adhesive.

5. The ballistic shield system (100) of any of claims 1 to 4, wherein the shield (10) has a back (11) and a front (13), and the ballistic cover (110) has a back (111) and a front (113) opposite the back (111); wherein the first curved profile is configured to surround the user, and the ballistic cover (110) has a complementary shape; and wherein the second curved profile is a concave profile.

6. The ballistic shield system (100) of any of claims 1 to 5, wherein the shield (10) comprises a first portion (12), a second portion (14) and a transition (16) joining the first portion and the second portion, and the ballistic cover (110) comprises a third portion that substantially covers the first portion (112) and a fourth portion (114) that substantially covers the second portion.

7. The ballistic shield system (100) of claim 6, wherein the transition (16) is configured to support an item being used by a user of the ballistic shield system.

8. The ballistic shield system (100) of any of claims 1 to 7, wherein the fastening system (120) is configured to retain at least a portion of the ballistic cover (110) on the shield (10) in response to the ballistic cover (110) cracking.

9. The ballistic shield system (100) of any of claims 1 to 8, wherein the fastening system (120) is a two-part system comprising a first part (120-1, 120-2, 120-3, 120-4) and a second part (120-1, 120-2, 120-3, 120-4).

10. The ballistic shield system (100) of any of claims 1 to 9, wherein the shield (10) has a front (13) and a back (11).

11. The ballistic shield system (100) of any of claims 1 to 10, wherein the ballistic cover (110) has a front (113) and a back (111).

12. The ballistic shield system (100) of claim 11 when dependent on claim 10, wherein the fastening system (120) attaches the back (111) of the ballistic cover (110) to the front (113) of the shield (10).

## Patentansprüche

1. Ballistisches Schildsystem (100), das Folgendes umfasst:
einen Schild (10), der ein erstes gekrümmtes Profil und eine erste ballistische Bewertung aufweist;
eine ballistische Abdeckung (110) aus einem Polyethylen mit ultrahohem Molekulargewicht, die ein zweites gekrümmtes Profil und eine zweite ballistische Bewertung aufweist, wobei die zweite ballistische Bewertung höher als die erste ballistische Bewertung ist; und
ein Befestigungssystem (120), das konfiguriert ist, die ballistische Abdeckung (110) am Schild (10) zu befestigen,
wobei das zweite gekrümmte Profil mit dem ersten gekrümmten Profil übereinstimmt, derart, dass ein gleichmäßiger Kontakt zwischen dem Schild (10) und der ballistischen Abdeckung (110) bereitgestellt wird, um das Auftreten von ballistischen Leerstellen zwischen dem Schild (10) und der ballistischen Abdeckung (110) zu minimieren.

2. Ballistisches Schildsystem (100) nach Anspruch 1, wobei das Befestigungssystem (120) eine Befestigungsanordnung ist.

3. Ballistisches Schildsystem (100) nach einem der Ansprüche 1 bis 2, wobei das Befestigungssystem (120) einen ersten Abschnitt, der auf dem Schild angeordnet ist, und einen zweiten Abschnitt, der auf der ballistischen Abdeckung angeordnet ist, umfasst.

4. Ballistisches Schildsystem (100) nach einem der Ansprüche 1 bis 3, wobei das Befestigungssystem (120) eine Anordnung von Mutter und Schraube und/oder ein Material mit Haken und Schlaufe und/oder eine Magnetanordnung und/oder eine Klammer und/oder ein Haftmittel ist.

5. Ballistisches Schildsystem (100) nach einem der Ansprüche 1 bis 4, wobei der Schild (10) eine Rückseite (11) und eine Vorderseite (13) aufweist und die ballistische Abdeckung (110) eine Rückseite (111) und eine Vorderseite (113), die der Rückseite (111) gegenüberliegt, aufweist; wobei das erste gekrümmte Profil konfiguriert ist, den Benutzer zu umgeben, und die ballistische Abdeckung (110) eine komplementäre Form aufweist; und wobei das zweite gekrümmte Profil ein konkaves Profil ist.

6. Ballistisches Schildsystem (100) nach einem der Ansprüche 1 bis 5, wobei der Schild (10) einen ersten Abschnitt (12), einen zweiten Abschnitt (14) und einen Übergang (16), der den ersten Abschnitt und den zweiten Abschnitt verbindet, umfasst und die ballistische Abdeckung (110) einen dritten Abschnitt, der im Wesentlichen den ersten Abschnitt (112) abdeckt, und einen vierten Abschnitt (114), der im Wesentlichen den zweiten Abschnitt abdeckt, umfasst.

7. Ballistisches Schildsystem (100) nach Anspruch 6, wobei der Übergang (16) konfiguriert ist, ein Element zu tragen, das durch einen Benutzer des ballistischen Schildsystems verwendet wird.

8. Ballistisches Schildsystem (100) nach einem der Ansprüche 1 bis 7, wobei das Befestigungssystem (120) konfiguriert ist, als Antwort darauf, dass die ballistische Abdeckung (110) bricht, zumindest einen Abschnitt der ballistischen Abdeckung (110) auf dem Schild (10) zu halten.

9. Ballistisches Schildsystem (100) nach einem der Ansprüche 1 bis 8, wobei das Befestigungssystem (120) ein zweiteiliges System ist, das eine erste Komponente (120-1, 120-2, 120-3, 120-4) und eine zweite Komponente (120-1, 120-2, 120-3, 120-4) umfasst.

10. Ballistisches Schildsystem (100) nach einem der Ansprüche 1 bis 9, wobei der Schild (10) eine Vorderseite (13) und eine Rückseite (11) aufweist.

11. Ballistisches Schildsystem (100) nach einem der Ansprüche 1 bis 10, wobei die ballistische Abdeckung (110) eine Vorderseite (113) und eine Rückseite (111) aufweist.

12. Ballistisches Schildsystem (100) nach Anspruch 11, wenn abhängig von Anspruch 10, wobei das Befestigungssystem (120) die Rückseite (111) der ballistischen Abdeckung (110) an der Vorderseite (113) des Schilds (10) befestigt.

## Revendications

1. Système (100) de bouclier balistique, comprenant :
un bouclier (10) présentant un premier profil incurvé et un premier classement balistique ;
une couverture balistique (110) en polyéthylène à ultra haut poids moléculaire présentant un deuxième profil incurvé et un deuxième classement balistique, le deuxième classement balistique étant supérieur au premier classement balistique ; et
un système (120) de fixation configuré pour fixer la couverture balistique (110) au bouclier (10),
le deuxième profil incurvé coïncidant avec le premier profil incurvé pour donner un contact uniforme entre le bouclier (10) et la couverture balistique (110) afin de minimiser l'occurrence de vides balistiques entre le bouclier (10) et la couverture balistique (110).

2. Système (100) de bouclier balistique selon la revendication 1, le système (120) de fixation étant un ensemble d'éléments de fixation.

3. Système (100) de bouclier balistique selon l'une quelconque des revendications 1 à 2, le système (120) de fixation comprenant une première partie disposée sur le bouclier et une deuxième partie disposée sur la couverture balistique.

4. Système (100) de bouclier balistique selon l'une quelconque des revendications 1 à 3, le système (120) de fixation étant au moins un système parmi un assemblage par écrou et boulon, un matériau auto-agrippant, un assemblage par aimant, une agrafe et un adhésif.

5. Système (100) de bouclier balistique selon l'une quelconque des revendications 1 à 4, le bouclier (10) possédant un dos (11) et une face (13), et la couverture balistique (110) possédant un dos (111) et une face (113) opposée au dos (111) ; le premier profil incurvé étant configuré pour entourer l'utilisateur, et la couverture balistique (110) présentant une forme complémentaire ; et le deuxième profil incurvé étant un profil concave.

6. Système (100) de bouclier balistique selon l'une quelconque des revendications 1 à 5, le bouclier (10) comprenant une première partie (12), une deuxième partie (14) et une transition (16) joignant la première partie et la deuxième partie, et la couverture balistique (110) comprenant une troisième partie qui recouvre sensiblement la première partie (112) et une quatrième partie (114) qui recouvre sensiblement la deuxième partie.

7. Système (100) de bouclier balistique selon la revendication 6, la transition (16) étant configurée pour porter un article en cours d'utilisation par un utilisateur du système de bouclier balistique.

8. Système (100) de bouclier balistique selon l'une quelconque des revendications 1 à 7, le système (120) de fixation étant configuré pour maintenir au moins une partie de la couverture balistique (110) sur le bouclier (10) en réponse à une fissuration de la couverture balistique (110).

9. Système (100) de bouclier balistique selon l'une quelconque des revendications 1 à 8, le système (120) de fixation étant un système en deux parties comprenant une première partie (120-1, 120-2, 120-3, 120-4) et une deuxième partie (120-1, 120-2, 120-3, 120-4).

10. Système (100) de bouclier balistique selon l'une quelconque des revendications 1 à 9, le bouclier (10) possédant une face (13) et un dos (11).

11. Système (100) de bouclier balistique selon l'une quelconque des revendications 1 à 10, la couverture balistique (110) possédant une face (113) et un dos (111) .

12. Système (100) de bouclier balistique selon la revendication 11 lorsqu'elle est dépendante de la revendication 10, le système (120) de fixation fixant le dos (111) de la couverture balistique (110) à la face (113) du bouclier (10).
